# EUROPEAN PATENT APPLICATION

(11) **EP 0 836 985 A2**
(43) Date of publication of application: **22.04.1998**
(21) Application number: 97117662.3
(22) Date of filing: 12.10.1997
(51) Int. Cl.: B62K 15/00

(54) **Collapsible scooter**

(30) Priority: 17.10.1996 IT MO960134
(71) Applicant: Cianchetti, Carlo, 91124 Cagliari (IT)
(72) Inventor: Cianchetti, Carlo, 91124 Cagliari (IT)
(74) Representative: Luppi, Luigi

(57) **Abstract**

The collapsible scooter comprises a footboard (2; 23) with front wheel (3) and rear wheel (4; 40) and a steering bar (5) connected to the footboard (2; 23) and rotatably connected to the front wheel (3) around a horizontal axis, a stabilizing frame (6) associated with said bar being hinged to said footboard (2; 23) and provided with sleeve means (14) arranged to rotatably support the bar (5); motorized means (50, 51, 52) coupled with the rear wheel by transmission means (53, 54, 56, 57, 58) being fixed below the footboard (2; 23) .

## Description

The invention concerns improvements in, or related to collapsible scooters, comprising a footboard with front and rear wheels and steering bar connected to the footboard and rotatably connected around a horizontal axis to the front wheel, a stabilizing frame being hinged to said footboard and being coupled with said steering bar. WO95/34461, describes such a scooter, wherein however, even if the complete collapsing of the steering bar from an upright operative position to a collapsed position, in which the bar and the relative stabilizing frame rest on the footboard, is possible, the manufacture of hinging means for hinging the steering bar to the footboard is somewhat complicate.

An aim of the present invention is to eliminate the difficulties mentioned above and to provide a collapsible scooter having a simplified structure, but maintaining the possibility of maximum reduction of the volume occupied by the scooter in its collapsed position.

A further aim is to provide a scooter which may be advanced without the driver being obliged to a physical effort for driving it.

According to the invention, a scooter of the type mentioned above is provided , wherein the stabilizing frame is provided with sleeve means arranged to rotatably support the steering bar about its longitudinal axis, as well as to transmit to the frame axial loads acting on the steering bar during running.

In this way, the steering bar may be independent from the footboard at the rear wheel and thus the structure of the vehicle is considerably simplified. On the other hand, the axially stable coupling between the steering bar and the sleeve assures that the loads transmitted from the ground to the front wheel are transmitted to the footboard, even if there are no hinging means for hinging the bar to the footboard. Moreover, collapsing the frame by rotating it about the hinging means that hinge the frame to the footboard makes it possible, however, to collaps correspondingly the steering bar on the footboard.

According to a further aspect of the present invention, a scooter is provided comprising a rotatably footboard supporting at least a rear wheel and associated with a steering bar having a lower end to which at least a front wheel is coupled, characterized in that, below the footboard fixed motorized means are coupled with the rear wheel by driving means.

The invention will be better understood with reference to the attached drawings, wherein:
Figure 1 shows a side view of a scooter in running position;
Figure 2 is a right-side view of Figure 1;
Figure 3 is a bottom view of Figure 1;
Figure 4 is a side view of a scooter in collapsed position;
Figure 5 is a top view of Figure 4;
Figure 6 is a side view as in Figure 1, but shoving an embodiment provided with a steering bar tilted with respect to the vertical in order to have greater stability during running, particularly in the event of a sudden stop or slowdown;
Figure 7 is a partial, enlarged and interrupted sectional view of the scooter of Figure 1, through a horizontal axis passing through the front wheel;
Figure 8 is the section VIII-VIII of Figure 1;
Figure 9 is a partially interrupted side view of a scooter to show the structure of the motorizing means;
Figure 10 is the bottom view of Figure 2.

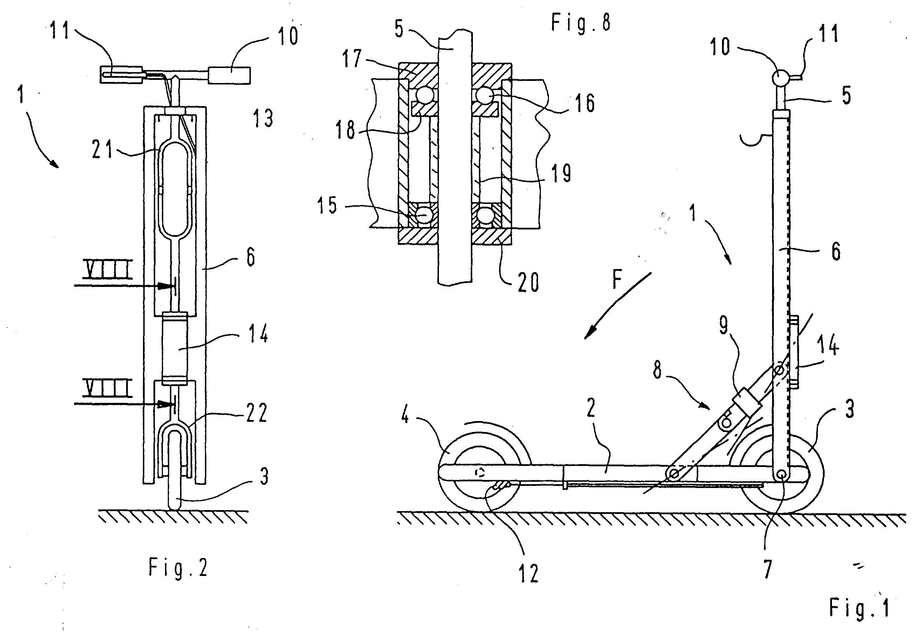

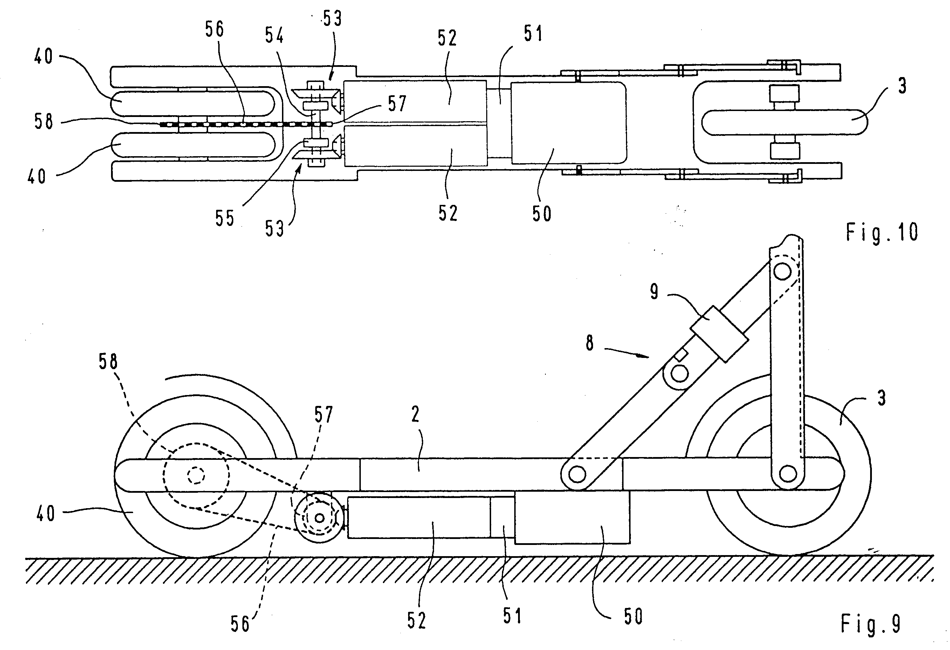

A collapsible scooter 1 comprises a footboard 2 provided with front wheel 3 and rear wheel 4, and associated with a front steering bar 5 which is engaged by a stabilizing frame 6 hinged, at its base, to the footboard 2 by means a pair of pivots 7. Two pair of levers 8 are interposed between the frame 6 and the footboard 2, in order to render the frame 6 openable like compasses with respect to the footboard 2 and to assure that the running position may be maintained by means of an optional slide 9 arranged to render them integral with each other, when engaged. The slide may be omitted if the levers, in the opening position, are disposed with an angle less than 180° therebetween, as shown with dot-and-dash line in Figure 1. The steering bar is provided with a steering handle 10 with cable brake 11 acting at 12 on the rear wheel 4. The frame 6 is provided above with an eyelet 13 slidably coupled with the nearest portion of the bar 5 to the steering handle 10, to allow a free axial sliding of the said bar when passing from the operative position to the collapsed position, along the direction shown by arrow F, and vice versa. As shown in Figure 2, according to a specific peculiarity of the invention, a sleeve 14 integral with the frame 6, through which the bar 5 passes, is provided. In order to allow the bar 5 to rotate about the respective longitudinal axis, preferably lower 15 and upper bearings 16 (Figure 8) are provided, that are interposed between the bar 5 and the sleeve 14, at least one of which is preferably selected as a thrust bearing to support axial loads transmitted to the bar 5 during running. The thrust bearing 16 is interposed between an upper annular body 17 and an annular projection 18 of the bar 5. The lower radial bearing 15 is radially interposed between the bar and the sleeve, and is arranged below the bearing 17 by spacing means 19 and a lower annular body 20 of the sleeve 14. However, an acceptable functionality may be obtained by providing only one bearing. The arrangement of the bearings 15, 16 and of the respective annular bodies may be reversed (annular body 17 in a lower position and annular body 20 in an upper position) with corresponding functional reversal of the associated parts. The annular bodies 17 and 20 may be advantageously constituted by ring nuts. The bar 5 has a substantially oval opening, arranged to receive the rear wheel in a collapsed posizion. In addition, the bar 5 is equipped, at its bottom portion, with a fork 22 supporting the front wheel 3, the fork being not connected to the footboard 2.

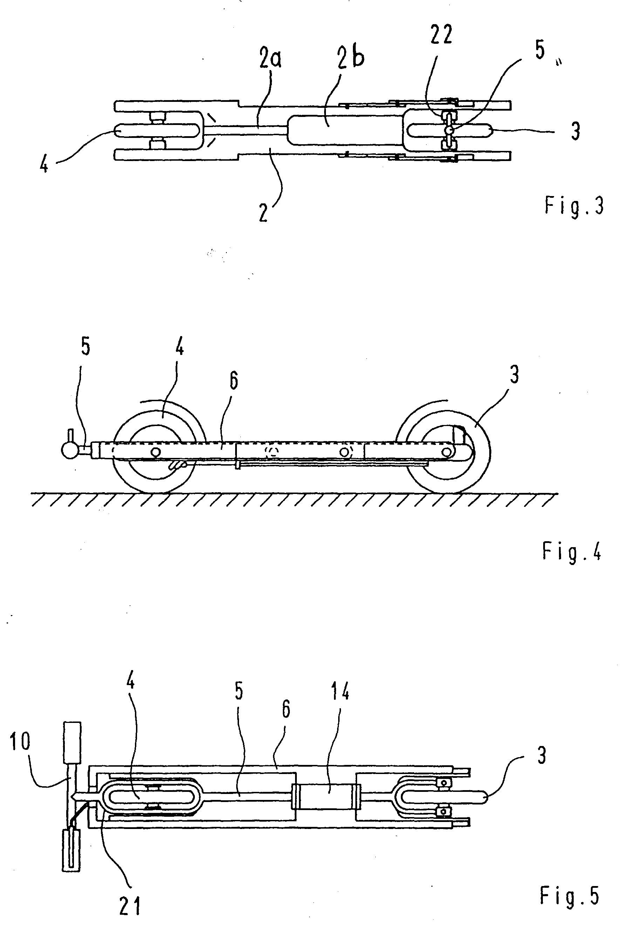

As shown in Figure 3, the footboard 2 is equipped with a groove 2a to receive the steering bar 5 in the collapsed position, said groove leading to a recess 2b having a greater width to receive the sleeve 14.

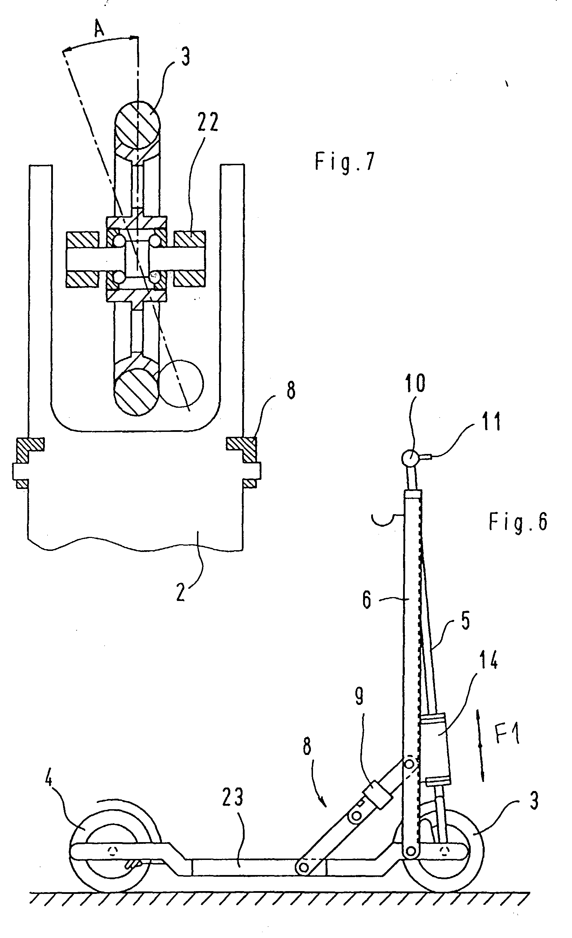

In the embodiment of Figure 6, the footboard has a depressed central zone 23 and the steering bar 5 is tilted forward with respect to the vertical. In this embodiment, to allow a complete collapse, the sleeve 14 must be axially movable, for a few centimeter length, with respect to the frame 6 along the direction indicated by arrow F1: the downward movement being allowed when the scooter has to be completely collapsed. Alternatively, when the sleeve 14 is stationary with respect to the frame 6, the bar 5 may be correspondingly axially movable in a limited way inside the sleeve 14.

As shown in Figure 9, the footboard 2 may be underneath provided with an electric accumulator 50, connected to a rheostat 51 for feeding a pair of electric engines 52, advantageously dynamos, having the drive shafts coupled, by means of bevel gears, with a shaft 54 supported on the footboard by bands provided with ball bearings 55. Such a shaft is provided with a pinion 57 coupled, by means of a chain, with a crown wheel 58 keyed to the shaft of the twin rear wheels 40.

In the embodiment with a single rear wheel the crown wheel connected to such wheel is located sideways with respect to the wheel and the pinion, keyed to the shaft 54, is suitably arranged at the same side.

In the motorized embodiment, the width of the vehicle may be suitably increased to allow a support for both the feet of the driver.

## Claims

1. Improved collapsible scooter, comprising a footboard (2; 23) with front wheel (3) and rear wheel (4; 40) and a steering bar (5) connected to the footboard (2; 23), and rotatably connected to the front wheel (3) around a horizontal axis, a stabilizing frame (6) being hinged to said footboard (2; 23) and being associated with said bar (5), characterized in that the stabilizing frame (6) is provided with sleeve means (14) arranged to rotatably support the bar (5) around its longitudinal axis, as well as to transmit to the frame axial loads acting on the bar (5) during running.

2. Collapsible scooter according to claim 1, characterized in that said sleeve means (14) comprises a tubolar case inside which said bar is rotatably coupled by means of bearing means (16, or 15).

3. Collapsible scooter according to claim 1, or 2, characterized in that said sleeve means (14) is integral with said frame (6).

4. Collapsible scooter according to claim 1, characterized in that said sleeve means (14) is axially slidably coupled with said frame (6).

5. Collapsible scooter according to claim 1, characterized in that said bar (5) is slidably coupled inside said sleeve means (14).

6. Collapsible scooter according to any one of claims 4, or 5, characterized in that said bar (5) is tilted with respect to the frame (6) in such a way that the front wheel (3) is arranged forward with respect to said frame (6), the displacement of the bar (5) with respect to said sleeve means (14), or, respectively, of said sleeve means (14) with respect to said frame (6) being arranged to allow the complete collapse of the bar (5) and the frame (6) on the footboard (2; 23).

7. Collapsible scooter according to claim 1, characterized in that, motorized means (50, 51, 52), coupled with the rear wheel (40) by means of transmission means (53, 54, 56, 57, 58), is fixed below the footboard.

8. Collapsible scooter according to claim 7, characterized in that said motorized means comprises at least one electric energy accumulator (40), connected to a rheostat (51) and to at least one dynamo (52).

9. Collapsible scooter according to claim 7, characterized in that said transmission means comprise at least one pair of bevel gears (53) and a chain transmission (56, 57, 58).

10. Scooter comprising a footboard (2; 23) rotatably supporting at least a rear wheel (4; 40) and connected to a steering bar (5) having a lower end to which at least one front wheel (3) is coupled, characterized in that, motorized means (50, 51, 52), coupled with the rear wheel (40) by means of transmission means (53, 54, 56, 57, 58), is fixed below the footboard.

11. Collapsible scooter according to claim 10, characterized in that said motorized means comprises at least one electric energy accumulator (40), connected to a rheostat (51) and to at least one dynamo (52).

12. Collapsible scooter according to claim 10, characterized in that said transmission means comprise at least one pair of bevel gears (53) and a chain transmission.
